(19) Europäisches Patentamt
European Patent Office
Office européen des brevets

(11) **EP 4 501 845 A1**

(12) **EUROPEAN PATENT APPLICATION**

(43) Date of publication:
**05.02.2025 Bulletin 2025/06**

(21) Application number: **23189884.2**

(22) Date of filing: **04.08.2023**

(51) International Patent Classification (IPC):
**C01B 32/05** (2017.01)  **H01M 4/00** (2006.01)

(52) Cooperative Patent Classification (CPC):
**C01B 32/05; H01M 4/00**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Albert-Ludwigs-Universität Freiburg
79098 Freiburg (DE)**

(72) Inventors:
• **Fischer, Anna
79117 Freiburg (DE)**
• **Ortlieb, Niklas
79108 Freiburg (DE)**
• **Berestok, Taisiia
4056 Basel (CH)**
• **Küspert, Sven
79104 Freiburg (DE)**

(74) Representative: **noventive
Patentanwaltsgesellschaft mbH
Riesstraße 16
80992 München (DE)**

(54) **3D-POROUS CARBON STRUCTURES, ELECTRODES COMPRISING THESE, AND THEIR METHODS OF PRODUCTION AND USE**

(57) The present invention relates to porous carbon structure comprising one or more sets of porous spherical carbon particles, wherein each of said one or more sets of porous spherical carbon particles has a monomodal, bimodal or multimodal particle diameter distribution, and/or a monomodal, bimodal or multimodal templated pore size distribution, wherein each mode of said particle diameter distribution defines a subset of porous spherical carbon particles within the set, each subset having a particle diameter dispersity (d) of 1.2 or less, and wherein each mode of the templated pore size distribution defines a subset of porous spherical carbon particles within the set, each subset having a templated pore size dispersity (d') of 1.2 or less. The invention further relates to methods for producing the porous carbon structures of the invention, electrodes made from such structures and their use in various applications.

Fig. 2

EP 4 501 845 A1

**Description**

FIELD OF THE INVENTION

The present invention relates to porous carbon structures assembled from sets of low dispersity porous spherical carbon particles and their methods of production. The present invention further relates to electrodes comprising porous carbon structures with defined three-dimensional structures, their methods of production and their uses.

BACKGROUND OF THE INVENTION

The rational design of carbon electrode structures plays an important role in improving the electrochemical properties of energy storage and conversion devices. For most applications, well-defined three-dimensional (3D) porous carbon structures, as well as control over electrode porosity and pore structure is desired. Most of the time, such carbon electrodes are assembled or processed from carbon powder materials composed of ill-defined primary particles and secondary agglomerates of these. The properties of the primary particles and their aggregates as well as particle packing co-define the resulting electrode structure.

Based on the structure of functional electrodes, it can be shown that not only a well-defined porous architecture within each particle volume (intraparticulate porosity) affects its function and performance, but also a well-defined porous architecture between the particles (interparticulate porosity) in the electrode volume.

The porous structure between the particles is controlled by the morphological properties of the powder material (primary particle shape, size, and homogeneity of the sample), as well as the dispersion state of the particles in a dispersion or an ink. These determine the packing of the powder constituting particles. High dispersity particles negatively affect coating reproducibility and lead to higher tortuosity, inhomogeneous pore distribution and denser packing, resulting in an inaccessible "dead" electrode volume and hindering percolation and/or penetration of the electrolyte, thus limiting mass transfer.

In commercial applications, high current densities are required which require in a first approximation high loading and thick electrodes with effective percolation. This underscores the need for 3D-structural engineering of electrodes and 3D-structural engineering of constituting particles that control intraparticle properties (particle diameter, pore size, pore connectivity, surface area, pore volume, surface functionality, graphitization, conductivity) as well as interparticle properties within a 3D-porous electrode structure built from it (percolation, tortuosity, 3D-bulk porosity, electrode conductivity, etc.).

However, simultaneous and independent control of all powder particle parameters and properties is not trivial. Similarly, control of all the previously mentioned intraparticle and interparticle properties along with a low particle diameter dispersity is a huge advantage for constructing tailored 3D-porous carbon structures and electrodes for a variety of applications, including electrochemical applications in the fields of supercapacitors, capacitive desalination, batteries and electrocatalysis.

The shortage of fossil energy resources and the environmental impact related with their consumption calls for new energy systems with efficient utilization of renewable energy sources. In this context, the deployment of electrochemical energy conversion and storage devices, such as fuel cells, electrolysers, supercapacitors or batteries, is urgently required.

In these applications, carbon materials play an important role in terms of electrode design, be it as conductive support for high-performance electrocatalysts, derived catalyst layers and membrane-electrode-assemblies, as conductive additives or active storage materials in battery electrodes, or as capacitive storage material in electrochemical double layer supercapacitors, or as scaffold materials in pseudo-capacitors or hybrid capacitors. The high surface to volume ratio of conductive carbon-based nanomaterials allows dramatic increase of the surface area for charge storage or transfer.

For the above applications, electrodes or electrode coatings are fabricated from powder materials. For this purpose, the powdery materials, with solvents, binders and other additives, are processed into inks or pastes and homogeneously applied/coated to carefully selected current collectors. When these mixtures dry, 3D-percolated particle structures, also called electrodes or electrode coatings, are created. The resulting 3D-percolated particle structures, also called electrode structure, correlate with the nature and packing of the primary particles and have a major influence on the electrochemical properties of the resulting electrodes.

Hence, the rational design of carbon-based electrode materials and electrode structures plays an important role in improving the electrochemical properties of energy storage and energy conversion electrodes and devices. For most applications, well-defined and easily processable porous carbon-based electrode materials and derived electrode structures with controlled particle morphology (ideally spherical), particle size and intraparticle pore size are desired. During electrode processing, particle morphology, size and dispersity determine packing and percolation, and hence the resulting 3D-electrode structure, which in turn influences the electrolyte distribution and interaction as well as multiple mass transport phenomena in an electrode.

N. Diez et al., in "Monodisperse Porous Carbon Nanospheres with UltraHigh Surface Area for Energy Storage in Electrochemical Capacitors" (Batteries & Supercaps 2022, 5, 3, e202100169), and in "Highly Packed Monodisperse Porous Carbon Microspheres for Energy Storage in Supercapacitors and Li-S Batteries" (ChemElectroChem 2020, 7, 3798 - 3810) report the use of microporous and mesoporous carbon nanoparticles with low particle diameter dispersity for use in supercapacitor applications. No effect of pore size nor particle diameter on performance was studied.

Hursán et al., in "Morphological Attributes Govern Carbon Dioxide Reduction on N-Doped Carbon Electrodes" (Joule 2019, 3, 1719 - 1733) analysed the influence of the intraparticle pore size on the electrocatalytic behaviour for $CO_2$-reduction, using N-doped carbon electrodes obtained from porous carbon nanospheres. The TEM (transmission electron microscopy) and SEM (scanning electron microscopy) data in this paper clearly demonstrate that the porous carbons which are formed do not have any particular particle shape.

Liu et al. in "Preparation of three-dimensional ordered mesoporous carbon sphere arrays by a two-step templating route and their application for supercapacitors" (J. Mater. Chem., 2009, 19, 3661 - 3667) show structured electrode materials for supercapacitors. Porosities in the micro, meso and macroporous regions are shown, but these could not be independently adjusted, leading to an uncontrollable electrode structure when processing was performed.

Huang et al. in "Easy Synthesis of Hierarchical Carbon Spheres with Superior Capacitive Performance in Supercapacitors" (Langmuir 2013, 29, 12266 - 12274) also show the production of micrometer-sized carbon spheres for supercapacitor applications. Independent control of electrode properties could not be achieved.

Berestok et al. in "High-Efficiency Monolithic Photosupercapacitors: Smart Integration of a Perovskite Solar Cell with a Mesoporous Carbon Double-Layer Capacitor" (Sol. RRL 2021, 5, 2100662) and in "A Monolithic Silicon-Mesoporous Carbon Photosupercapacitor with High Overall Photoconversion Efficiency" (Adv. Mater. Technol. 2022, 7, 2200237) show the formation of electrodes from nitrogen-doted carbon nanospheres, again without independent control of particle diameter and templated pore size.

US 8,784,768 B2 discloses hierarchically porous graphitic carbon particles and their use as electrode materials in electrochemical devices. However, the pore sizes of these particles have a high dispersity. Similarly, WO 2022/220451 A1 discloses the synthesis of porous carbon spheres with high surface areas and pore volumes, but no intraparticle pore size nor particle diameter control is reported.

On the other hand, WO 2007/140224 A2 discloses mesoporous carbon and carbon-silica composites with low dispersity pore sizes, however there is no control of particle diameters. Similarly, US 8,361,663 B2 discloses methods of production of mesoporous and macroporous carbon structures and electrodes. However, there is no control of particle shape or diameter, leading to the known drawbacks in the resulting electrodes.

The state of the art therefore poses a problem.

## SHORT DESCRIPTION OF THE INVENTION

The present invention is defined in the appended claims.

In particular, the present invention is embodied by a porous carbon structure comprising one or more sets of porous spherical carbon particles, wherein each of the one or more sets of porous spherical carbon particles has a monomodal, bimodal or multimodal particle diameter distribution, and/or a monomodal, bimodal or multimodal templated pore size distribution, wherein each mode of the particle diameter distribution defines a subset of porous spherical carbon particles within the set, each subset having a subset particle diameter dispersity (d) of 1.2 or less, and wherein each mode of the templated pore size distribution defines a subset of porous spherical carbon particles within the set, each subset having a subset templated pore size dispersity (d') of 1.2 or less. According to this aspect of the invention, a porous carbon structure is provided, which has been assembled from porous spherical carbon particles. The porous spherical carbon particles that make up the porous carbon structure are provided in one or more sets, each set being defined either by its particle diameter distribution, or by its templated pore size distribution, or by both its particle diameter distribution and its templated pore size distribution. According to the present invention, the particle diameter dispersity and/or the templated pore size dispersity are required to be low ($\leq 1.2$).

According to this aspect of the invention, each set of porous spherical carbon particles may have a monomodal, bimodal or multimodal particle size distribution. Sets that do not have a monomodal particle size distribution may be subdivided into subsets corresponding to the number of peaks in the particle size distribution. A set with a bimodal particle size distribution consists of two subsets, each with a monomodal particle size distribution. In this case, each subset has a subset particle diameter dispersity (d) of 1.2 or less. Similarly, sets with a particle size distribution of three, four or more modes consist of three, four or more subsets, each with a monomodal particle size distribution. In these cases also, each subset has a subset particle diameter dispersity (d) of 1.2 or less.

Further, according to this aspect of the invention, each set of porous spherical carbon particles may have a monomodal, bimodal or multimodal templated pore size distribution. Sets that do not have a monomodal templated pore size distribution may be subdivided into subsets corresponding to the number of peaks in the templated pore size distribution. A set with a bimodal templated pore size distribution consists of two subsets, each with a monomodal templated pore size distribution. In this case, each subset has a subset templated pore size dispersity (d') of 1.2 or less. Similarly, sets with a templated pore size distribution of three, four or more modes consist of three, four or more subsets, each with a monomodal templated pore size distribution. In these cases also, each subset has a subset templated pore size dispersity (d') of 1.2 or less.

According to this aspect, each set of porous spherical carbon particles making up the porous carbon structure according to the invention may be defined by either its particle diameter distribution, or its templated pore size distribution, or both.

According to a further aspect of the present invention, one or more of the sets making up the porous carbon structure may have either a monomodal particle size distribution, or a monomodal templated pore size distribution. For example, the porous carbon structure according to this aspect of the invention may comprise one or more sets of porous spherical carbon particles having a monomodal particle size distribution and a particle diameter dispersity (Đ) of 1.2 or less, optionally one or more sets of porous spherical carbon particles having bimodal or multimodal particle size distributions, of which the modal subsets have subset particle size dispersities (d) of 1.2 or less, and optionally one or more sets of porous spherical carbon particles having bimodal or multimodal templated pore sizes, of which the modal subsets have subset templated pore size dispersities (d') of 1.2 or less. Alternatively, for example, the porous carbon structure according to this aspect of the invention may comprise one or more sets of porous spherical carbon particles having a monomodal templated pore size distribution and a templated pore size dispersity (Đ') of 1.2 or less, optionally one or more sets of porous spherical carbon particles having bimodal or multimodal templated pore size distributions, of which the modal subsets have subset templated pore size dispersities (d') of 1.2 or less, and optionally one or more sets of porous spherical carbon particles having bimodal or multimodal particle size distributions, of which the modal subsets have subset particle size dispersities (d) of 1.2 or less.

According to this aspect, at least one set of porous spherical carbon particles from which the porous carbon structure is assembled will have either a monomodal particle diameter distribution or a monomodal templated pore size distribution.

According to a further aspect of the present invention, one or more of the sets of porous spherical carbon particles have a monomodal particle diameter distribution with a particle diameter dispersity (Đ) of 1.2 or less, and a monomodal templated pore size distribution with a templated pore size dispersity (Đ') of 1.2 or less. For example according to this aspect of the invention, the porous carbon structure may be assembled from one set of porous spherical carbon particles having a monomodal particle diameter distribution and a particle diameter dispersity (Đ) of 1.2 or less, and a monomodal templated pore size distribution with a templated pore size dispersity (Đ') of 1.2 or less, optionally one or more further sets of porous spherical carbon particles having particle diameter dispersities (Đ) of 1.2 or less, and templated pore size dispersities (Đ') of 1.2 or less, and optionally one or more further sets of porous spherical carbon particles having bimodal or multimodal templated pore size distributions, of which the modal subsets have subset templated pore size dispersities (d') of 1.2 or less, and optionally one or more sets of porous spherical carbon particles having bimodal or multimodal particle size distributions, of which the modal subsets have subset particle size dispersities (d) of 1.2 or less.

According to this aspect, at least one set of porous spherical carbon particles from which the porous carbon structure is assembled will have both a monomodal particle diameter distribution and a monomodal templated pore size distribution, each with a dispersity of 1.2 or less.

According to a further aspect of the present invention, the porous carbon structure consists of just one set of porous spherical carbon particles. This one set of porous spherical carbon particles may have a monomodal, bimodal or multimodal particle size distribution, with each modal subset having a subset particle size dispersity (d) of 1.2 or less, and/or a monomodal, bimodal or multimodal templated pore size distribution, with each modal subset having a subset templated pore size dispersity (d') of 1.2 or less. In one specific embodiment, the porous carbon structure may consist of a set of porous spherical carbon particles having a monomodal particle diameter distribution with a particle diameter dispersity (Đ) of 1.2 or less, and a monomodal templated pore size distribution with a templated pore size dispersity (Đ') of 1.2 or less.

According to this aspect, only one set of porous spherical carbon particles is employed to assemble the porous carbon structure. The porous carbon structure consists of porous spherical carbon particles having a monomodal, bimodal or multimodal particle diameter distribution and a monomodal, bimodal or multimodal templated pore size distribution, each with modal subset dispersities (d, d') of 1.2 or less. In one specific embodiment, the porous carbon structure consists of porous spherical carbon particles having a monomodal particle diameter distribution and a monomodal templated pore size distribution, each with a dispersity (Đ, Đ') of 1.2 or less.

According to the present invention, a set of porous spherical carbon particles having a bimodal or a multimodal templated pore size distribution may comprise individual particles having a monomodal templated pore size distribution. That is to say, each particle within the set includes pores that all have similar templated pore size, with a templated pore size dispersity ≤ 1.2. Alternatively, a set of porous spherical carbon particles having a bimodal or a multimodal templated pore size distribution may comprise individual particles having a bimodal or multimodal templated pore size distribution. This means that each individual particle within the set may comprise pores of different templated pore sizes.

In a preferred embodiment, at least one of the particle diameter dispersity (Đ), templated pore size dis-

persity (Đ'), subset particle diameter dispersity (d), and subset templated pore size dispersity (d') is 1.1 or less. In a further preferred embodiment, all these parameters are 1.1 or less.

According to one aspect of the invention, the porous carbon structure is a hierarchical structure, and the porous spherical carbon particles have particle diameters of 10 nm to 5000 nm, preferably of 50 nm to 500 nm, and the templated pore sizes are from 1 nm to 1000 nm, preferably from 5 nm to 100 nm. The use of these particle diameters and templated pore sizes may result in the porous carbon structure having a specific surface area of 25 $m^2 \cdot g^{-1}$ to 3000 $m^2 \cdot g^{-1}$, or from 200 $m^2 \cdot g^{-1}$ to 1500 $m^2 \cdot g^{-1}$, and pore volumes of 0.1 $cm^3 \cdot g^{-1}$ to 5.0 $cm^3 \cdot g^{-1}$, or from 0.25 $cm^3 \cdot g^{-1}$ to 3.0 $cm^3 \cdot g^{-1}$.

According to one aspect of the present invention, the porous spherical carbon particles are arranged in a layered fashion within the porous carbon structure. Each layer may consist of one or more sets of porous carbon particles. Irrespective of whether the layers consist of one or more sets of porous carbon particles, the layers may be monolayers having a thickness of exactly one porous spherical carbon particle, or multilayers having a thickness of more than one porous spherical carbon particle. For example, a porous carbon structure may comprise a first layer and a second layer disposed parallel to and in contact with the first layer, wherein each of the first and second layers consists of two sets of porous carbon particles as described above. Alternatively, for example, a porous carbon structure according to this aspect may consist of first, second and third layers, arranged in parallel to each other in this order and in contact with each other, and wherein the layers each have a monomodal particle diameter distribution and a monomodal pore size distribution, with the particle diameters and templated pore sizes being different for each set.

According to one aspect of the present invention, the porous carbon structure may have interparticle pore volume which is from 5% to 93%, preferably from 26% to 48%. Interparticle pore volume refers to the volume of the porous carbon structure which is left void between individual porous spherical carbon particles after assembly. Depending on the intended use of the porous carbon structure, the interparticle pore volume may be selected to achieve best possible results.

According to one aspect of the present invention, the ratio of intraparticle pore volume to interparticle pore volume is from 0.05 to 3.0, preferably from 0.1 to 2.0, more preferably from 0.7 to 1.9. Intraparticle pore volume derives from the volume of the templated pores of the porous spherical carbon particles employed to assemble the porous carbon structure according to the invention, whereas interparticle volume refers to the volume of the porous carbon structure which is left void between individual porous spherical carbon particles after assembly. The ratio of intraparticle pore volume to interparticle pore volume is derived from cumulative pore volume (obtained by QSDFT computation from $N_2$ physisorption)

and density measurement of the porous carbon structure (obtained by pycnometry), under assumption of an filling ratio of 74% for perfect packing of spherical carbon particles. Depending on the intended use of the porous carbon structure, the ratio of intraparticle pore volume to interparticle pore volume may be selected to achieve best possible results.

Also part of the present invention are methods for the production of the porous carbon structures according to the invention, comprising the steps of (i) providing one or more sets of porous spherical carbon particles as defined above, (ii) mixing the provided porous spherical carbon particles with one or more additives, (iii) applying the obtained mixture onto a substrate to form a layer of porous carbon structure, and (iv) drying and/or curing the applied mixture to form a dry layer of porous carbon structure. According to this method a porous carbon structure with one layer may be formed. By repeating these production steps with application of the mixture on top of the previously formed layer, additional layers may be formed. The method of production may further include one or more calendaring steps.

According to one embodiment, the mixing step (ii) may include addition of a dispersion medium to form an ink or a paste, and step (iii) of applying the obtained ink or paste is carried out by 3D-printing, slot-die coating, inkjet printing, doctor-blading, spray coating, spin-coating or dip-coating. According to an alternative embodiment, the mixing step (ii) leads to the formation of a dry particulate compotision.

According to this aspect, the substrate onto which the mixture is applied may be a current collector, such as for example a gas diffusion layer or membrane for a fuel cells or an electrolyzer, an aluminium or copper foil for a battery or a graphite foil for a supercapacitor.

According to a further aspect of the present invention, the one or more sets of porous spherical carbon particles of step (i) are obtained by (a) polymerisation of a polymerizable precursor in the presence of a template, in order to form a polymer-template composite, (b) carbonisation of the obtained polymer-template composite and (c) removal of the template by chemical etching, wherein the choice of template and the initiator concentration may be adjusted to independently define particle diameter distribution and pore size distribution. This aspect of the invention may form part of the method for the production of the porous carbon structures according to the invention.

Also part of the present invention are electrodes comprising porous carbon structures according to the invention. It has been found that the properties and applications of electrodes may be adapted and tuned by tailoring the porous carbon structures in line with the intended application. For example, in an electrode according to the present invention, mass transport may be influenced by interparticulate porosity, determined by the packing and diameter of the porous spherical carbon particles with a defined (low dispersity) templated intraparticulate porosity. Also for example, capacitance and capacitance retention may be regulated by the surface area of a hierarchical porous carbon structure, determined by the particle sizes and intraparticulate pore sizes of the porous spherical carbon particles.

According to some aspects of the invention, the electrodes may be adapted by binders and/or conductive additives. For example, the electrodes according to the invention may include one or more polymeric binders and/or ionomers. Also for example, the electrodes according to the invention may include conductive additives, making up no more than 20 wt.-%, based on the total weight of the electrode, or no more than 10 wt.-%, based on the total weight of the electrode.

Also part of the present invention is the use of the porous carbon structures and the electrodes of the present invention in electrochemical applications, such as electrochemical energy storage devices (batteries, double-layer capacitors) or electrochemical energy conversion devices (fuel cells, electrolysers).

Also part of the present invention is the use of the porous carbon structures and the electrodes of the present invention as a carrier, support or scaffold structure for active components, such as enzymes, metals, metal compounds such as oxides, sulfides, nitrides or others, nanoparticles, clusters and/or single-site catalysts, or molecular compounds active in for example heterogeneous catalysis and electrocatalytic reactions.

Also part of the present invention is the use of the porous carbon structures of the invention as or in conductive additives/scaffolds, gas diffusion layers, heterogeneous catalysis or in an article of manufacture for drug delivery, adsorption applications, or water purification applications.

Also part of the present invention is the use of the porous carbon structures of the invention as a template for the synthesis of microporous, mesoporous and/or macroporous metallic structures and/or metallic compound structures, such as for example metal oxide, metal sulfide, or metal nitride structures, for example.

### SHORT DESCRIPTION OF THE FIGURES

The invention will be further illustrated by reference to the following figures:

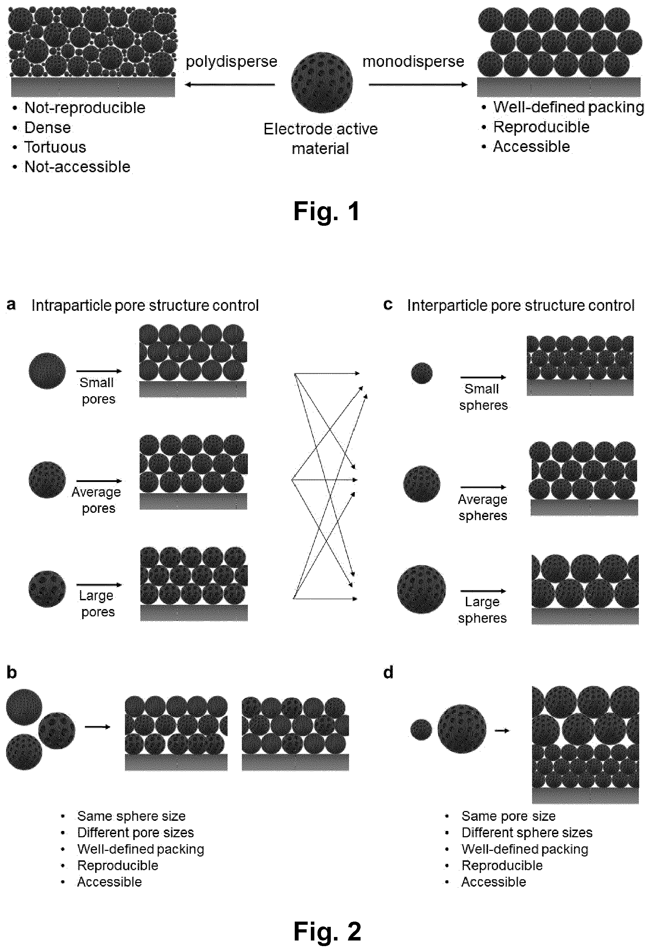

> Fig. 1 represents a schematic representation of a densely packed electrode resulting from high dispersity 3D-porous particle sizes (left) versus a homogeneously packed electrode resulting from low dispersity 3D-porous particles (right);
> Fig. 2 represents a number of schematic representations of different achievable electrode structures; electrodes from low dispersity spherical carbon particles with different intraparticle pore sizes but same particle sizes (a) and multimodal electrodes obtained from the same particles (layered (left), random (right)) (b); electrodes from low dispersity spherical carbon particles with the same intraparticle pore sizes but different particle sizes (c) and multimodal layered electrodes obtained from the same particles (d);

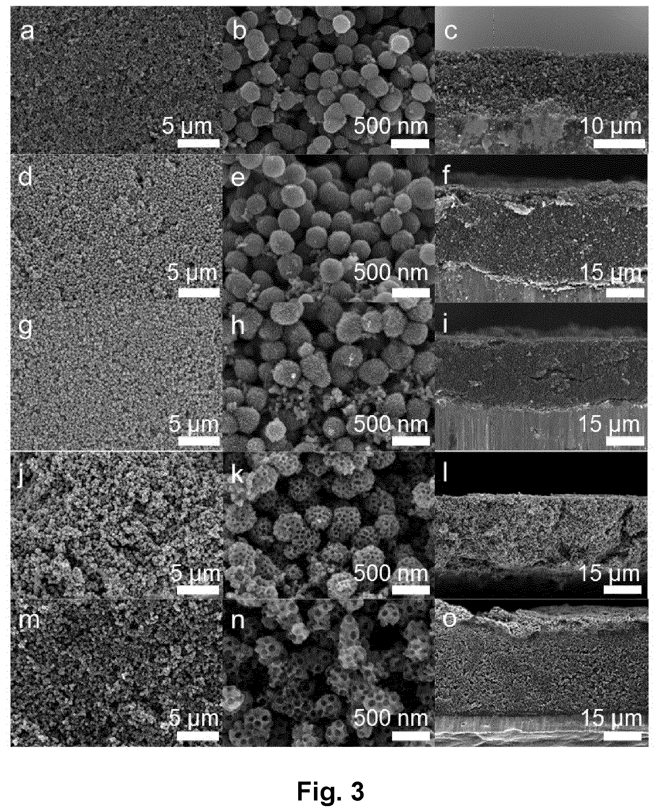

Fig. 3 represents SEM images of coatings prepared from MPNC (Mesoporous N-doped carbon sphere)-based inks: MPNC-7-300-1000 (a-c), MPNC-12-300-1000 (d-f), MPNC-23-300-1000 (g-i), MPNC-60-300-1000 (j-l) and MPNC-100-300-1000 (m-o); the numbers in the sample names indicate the pore size (in nm), particle size (in nm) and carbonization temperature (in °C), respectively in this order;

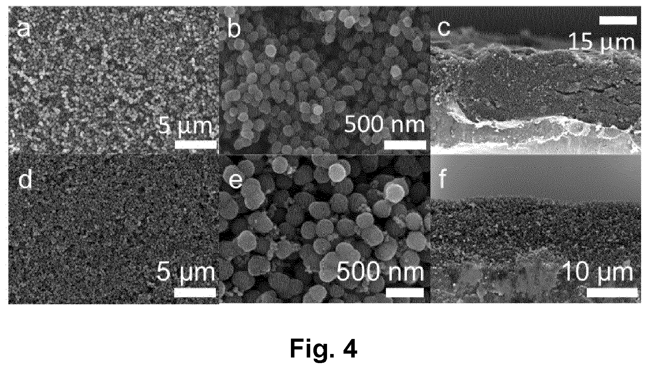

Fig. 4 represents SEM images of the coatings prepared from the MPNC-based inks: MPNC-7-130-1000 (a-c), MPNC-7-300-1000 (d-f);

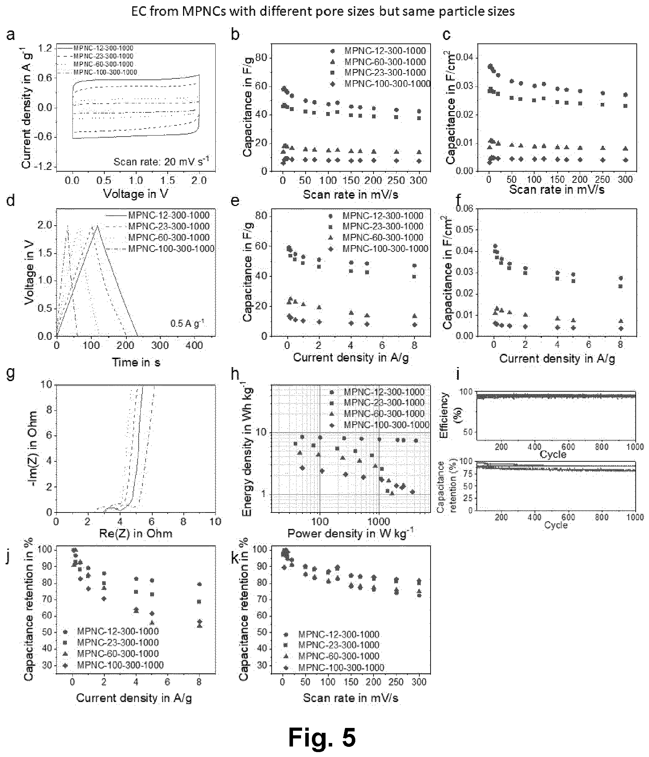

Fig. 5 represents various graphs showing a comparison of the performance of the supercapacitor devices assembled in a two-electrode coin cell configuration using $1.0$ M $LiPF_6$ EC/DEC electrolyte:

> (a): Comparison of CVs recorded at 20 mV s$^{-1}$ for MPNC samples with different pore sizes but same particle size;
> (b, c): Gravimetric and areal electrode capacitance with the scan rate;
> (d): Galvanostatic charge-discharge (GCD) curves obtained at $0.5$ A·g$^{-1}$;
> (e, f): Correlation between the current applied and specific electrode capacitance calculated from the GCD profiles;
> (g): Nyquist plots of the MPNC-based EDLC (electrochemical double layer capacitor) devices;
> (h): Comparison of the energy and power densities of the MPNC-devices;
> (i): Cycling stability of the MPNC-based EDLCs - efficiency and capacitance retention after 5000 cycles;
> (j, k): Capacitance retention with current density and scan rate;

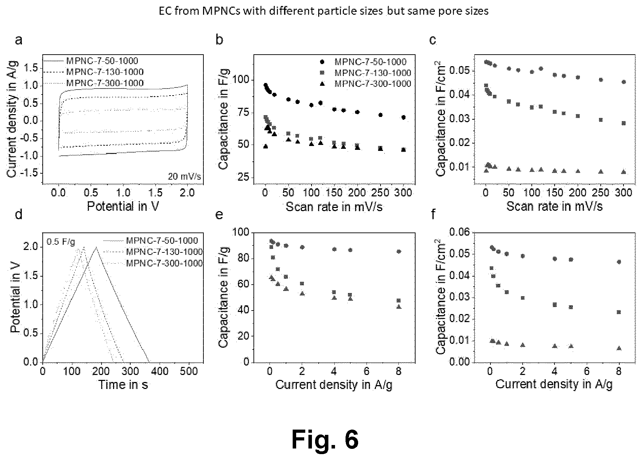

Fig. 6 represents various graphs showing a comparison of the performance of the supercapacitor devices assembled in a two-electrode coin cell configuration using $1.0$ M $LiPF_6$ EC/DEC electrolyte;

> (a): Comparison of CVs recorded at 20 mV·s$^{-1}$ for MPNC samples with same pore size but different particle sizes;
> (b, c): Gravimetric and areal electrode capacitance with the scan rate;
> (d): Galvanostatic charge-discharge curves obtained at $0.5$ A·g$^{-1}$;
> (e, f): Correlation between the current applied and specific electrode capacitance calculated from the GCD profiles.

It is understood that the following description and references to the figures concern exemplary embodiments of the present invention and shall not be limiting the scope of the claims.

DETAILED DESCRIPTION OF THE INVENTION

For a better understanding of the invention, the following explanations of the terminology used herein are considered useful. In the context of the present invention, the following definitions apply:

"Porous carbon structure" as used in the present application means a structure comprising a solid stable assembly of percolated carbon particles, wherein individual assembled carbon particles are specifically arranged in space with respect to each other, and wherein voids between individual carbon particles form an interparticular porosity. As used herein, porous carbon structures may comprise additional species besides the percolated carbon particles, such as heteroatoms, doping agents, additives, binders, and other species.

"Particle diameter", also referred to as particle size, indicates the spatial extent of a single particle. Particle diameters are determined by counting out the particle diameters on electron micrographs obtained by scanning (transmission) electron microscopy with a sufficient large number of particles (at least 200 particles). Non-spherical particles (for example elliptical particles) are described by their minimum and maximum diameter.

"Particle-diameter dispersity Đ ("D stroke") is based on the IUPAC definition of dispersity given in Pure Appl. Chem., Vol. 83, No. 12, pp. 2251-2259, 2011. Particle diameter dispersity Đ measures the width of a particle-diameter distribution and is given by

$$\text{Đ} = \frac{\sum N_i \sum N_i d_i^4}{\sum N_i d_i \sum N_i d_i^3}$$

, wherein $N_i$ denotes the number of particles of diameter $d_i$. For a sample of completely uniform particle-diameters Đ would be 1. Narrow particle diameter distributions having values for Đ < 1.2, preferably < 1.1 may be referred to as monodisperse particles, or low dispersity particles. Particle diameter distributions having values for Đ ≥ 1.2, may be referred to as polydisperse particles or high dispersity particles.

"Pore size" (pore width) means the distance between two opposite walls of the pore. According to IUPAC nomenclature (Pure & Appl. Chem. Vol. 66, No. 8, pp. 1739-1758, 1994) micropores have width smaller than 2 nm, mesopores have width between 2 and 50 nm, macropores have widths larger than 50 nm.

"Templated pore size" means the diameter of a spherical template employed for the pore formation in spherical porous carbon particles as used in the present invention. Polymerisation of a carbon precursor in the presence of nanometer-sized spherical templates leads to the formation of carbon-template composites. Removal of the template material leaves nanometer-sized pores within the polymeric carbon structures. The pores may be interconnected, and therefore the pores will not exclusively have spherical shapes, but they may take the shape of juxtaposed spheres with varying intersectional diameters. Therefore, "templated pore size" may differ from measured pore size, and the templated pore size dispersity may differ from the measured pore size dispersity. The templated pore size dispersity corresponds to the particle diameter dispersity of the templates employed to form the pores.

"Pore volume" in the sense of the present invention means the volume of the pores as measured by $N_2$-physisorption at 77K and estimated by using the t-plot method for micropores and the total pore volume at a relative pressure $p/p_0 = 0.98$ and/or QSDFT equilibrium model.

"Specific surface area" means the total accessible surface area of a material per mass unit [$m^2g^{-1}$]. The specific surface area is determined by $N_2$-physisorption at 77 K. Specific surface areas are calculated using the Brunauer-Emmer-Teller (BET) method fitting the $p/p_0$ range from 0.05 to 0.30 and/or QSDFT equilibrium model.

As used herein, a "set" of porous spherical carbon particles defines a number of porous spherical particles which have in common their particle diameter distribution and/or their templated pore size distribution.

A set of porous spherical carbon particles may be divided into "subsets" of porous spherical carbon particles, wherein each subset consists of porous spherical carbon particles having a monomodal particle diameter distribution. For example, a set of porous spherical carbon particles which has a bimodal particle diameter distribution consists of two subsets, each subset consisting of porous spherical carbon particles having a monomodal particle diameter distribution. Similarly, a set of porous spherical carbon particles which has a bimodal particle diameter distribution consists of a number of subsets corresponding to the modality of the set, each subset consisting of porous spherical carbon particles having a monomodal particle diameter distribution.

A set of porous spherical carbon particles may also be divided into "subsets" of porous spherical carbon particles, wherein each subset consists of porous spherical carbon particles having a monomodal templated pore size distribution. For example, a set of porous spherical carbon particles which has a bimodal templated pore size distribution consists of two subsets, each subset consisting of porous spherical carbon particles having a monomodal templated pore size distribution. Similarly, a set of porous spherical carbon particles which has a bimodal templated pore size distribution consists of a number of subsets corresponding to the modality of the set, each subset consisting of porous spherical carbon particles having a monomodal templated pore size distribution.

The present invention according to the appended claims provides porous carbon structures and electrodes made from those porous carbon structures. According to the present invention, the porous carbon structures are assembled from porous spherical carbon particles. The properties of the porous carbon structures define the properties of the electrodes, such as porosity, 3D-configuration, tortuosity, pore distribution, packing density, pore connectivity, surface area, surface functionalisation, graphitisation, conductivity, and the like. These properties are influenced by the structure and properties of the porous spherical carbon particles from which they are assembled. In particular, good reproducibility of assembled porous carbon structures requires control of of the porous spherical carbon particle properties, including their templated intraparticular porosity, particle diameter, as well as dispersity of templated intraparticular porosity and of particle diameter.

Compared to purely microporous materials with large specific surface areas (e.g. > 2000 $m^2g^{-1}$) but long and tortuous pore structures, well-defined mesoporous networks offer more efficient pathways for electrolyte ion infiltration and accommodation, resulting in improved mass transport and a more profitable and accessible electrode surface area. Thus, depending on the targeted application and its needs, the pore structure must be precisely engineered. This aspect applies to electrode structures, but is equally valid for filter structures or other applications that rely on 3D-porous carbon structures (freestanding, coated).

Typically, producing functional electrodes implies formulation of a slurry composed of a functional electrode material followed by its casting (e.g. doctor-blading, spray coating, dip-coating, etc.) onto a substrate or current collector (a.o. gas diffusion layers or membranes for fuel cells and electrolyzers, aluminum and copper foils for batteries or graphite foils for supercapacitors), suggesting that not only the intraparticle (within the particle volume) but also well-defined interparticle (between particles in the electrode volume) porous architectures needs to be designed. The interparticle porous structure of the coated electrode is controlled by morphological characteristics of the powder material, e.g. primary particle shape and size, and sample homogeneity, which determines the primary particles packing. At the same time, the surface composition has to be adjusted in order to facilitate dispersion of the slurry in the desired solvent and its proper adhesion to the substrate.

High dispersity samples not only compromise coating reproducibility, but also lead to higher tortuosity and denser packing, which can result in a non-accessible ("dead") electrode surface or rather resulting in a non-accessible electrode volume, meaning impeded percolation/penetration of the electrolyte, and hence, limited mass transport. The same argument also applies to reaction educts and products in the case of electrochemical conversion (e.g. in the field of electrocatalysis and electrosynthesis).

In commercial applications, high current rates are needed, meaning that increased loading and thicker electrodes with effective percolation and low tortuosity are required. However, usually thicker electrodes feature a lower effective accessible surface area electrode volume if not properly designed (due to diffusion limitation for instance). This emphasizes the need in an optimized 3D-structure engineering in line with facile electrode processing via controlling intraparticulate primary particle properties (such as pore size, pore connectivity, surface area, pore volume, surface functionality, graphitization and conductivity) as well as interparticulate properties (such as percolation, 3D electrode volume porosity etc.).

The porous carbon structures provided by the present invention allow tailoring of their properties as discussed above. This is achieved by providing spherical porous carbon particles having clearly defined particle diameters and/or clearly defined templated pore sizes. The particle diameters are clearly defined in the sense that the particle size distribution may be monomodal with a particle diameter dispersity Đ of 1.2 or less, preferably 1.1 or less. Alternatively, the particle diameter distribution may be bimodal or multimodal, and each diameter mode has a modal particle diameter dispersity Đ" of 1.2 or less, preferably 1.1 or less. In addition, or as an alternative, the templated pore sizes is clearly defined in the sense that the templated pore size distribution may be monomodal with a templated pore sizes dispersity Đ' of 1.2 or less, preferably 1.1 or less. Alternatively, the templated pore size distribution may be bimodal or multimodal, and each diameter mode has a modal templated pore size dispersity Đ''' of 1.2 or less, preferably 1.1 or less. According to the present invention porous carbon structures are provided which are assembled from spherical porous carbon particles, for which particle diameters and templated pore sizes have been set independently of each other. In addition, the particle diameter dispersities and templated pore size dispersities of the spherical porous carbon particles from which the porous carbon structures according to the invention have been assembled may be set independently of each other.

The synthesis of porous spherical carbon particles with low dispersities has been reported previously, for example by Melke et al. in "Electrochemical stability of silica templated polyaniline derived mesoporous N-doped carbons for the design of Pt based oxygen reduction reaction catalysts (Carbon 146 (2019) 44 - 59), and in "Investigating the Effect of Microstructure and Surface Functionalization of Mesoporous N-Doped Carbons on V4+/V5+ Kinetics" (https://dx.doi.org/10.1021/ac saem.0c01489): A polymerizable precursor, preferably aniline, is polymerized in the presence of a template, preferably SiOz particles, in order to form a polymer-$SiO_2$ composite. Then, the polymer-$SiO_2$ composite is carbonized, preferably under an inert gas atmosphere, and the template is removed by chemical etching.

Since then, it has been found that the choice of the template and the relative initiator concentrations result in the formation of independently adjustable low dispersity of particle diameters and of pore sizes. Physico-chemical properties, i.e. graphitization and surface functionalization, of the low dispersity porous spherical carbon particles can be controlled by thermal treatment and typical methods of chemical functionalization.

Previous approaches for the fabrication of 3D-porous carbon structures (e.g. electrode fabrication) do not use such highly defined carbon particle building blocks and are therefore very limited in the control and adjustability of the resulting 3D-porous carbon structures. These approaches mostly used undefined carbon particles, which are very dispersive in terms of pore sizes and particle sizes. For controlled approaches, templated mesoporous carbon particles have been used, but without defined particle shape or size, or low dispersity carbon particles have been used but without control over particle size or intraparticle porosity. Thus, even with these approaches, the tunability of the electrode structures was very limited.

According to the present invention, a carbon-electrode toolkit is provided, which allows to adjust both the intraparticulate pore sizes (or surface area) for charge storage or catalysis for example, and simultaneously the particle diameter for optimized mass transport. In this context, intraparticulate pore sizes and particle diameters are controlled independently from each other.

Since low dispersity spheres in a densest sphere packing are provided, the interparticle pore size between the particles scales with the particle size. For a defined intraparticular pore size optimized for a given application, the particle size may be adjusted to optimize the electrode: For example, the presence of intraparticulate pores leads to a large surface area and full utilization of carbon volume, whereas interparticulate pores influence mass transport to the spherical porous carbon particles.

In summary, the present invention provides a carbon sphere toolkit that allows control of all the physicochemical properties required for true 3D bottom-up electrode design. This not only enables the fabrication and study of model electrodes where the effects of pore size can be studied independently of the effects of particle size, but also bridges laboratory and commercial scale.

It should be noted that the present invention may comprise any combination of the features and/or limitations referred to herein, except for combinations of such features which are mutually exclusive. The foregoing description is directed to particular embodiments of the present invention for the purpose of illustrating it. It will be apparent, however, to one skilled in the art, that many modifications and variations to the embodiments described herein are possible. All such modifications and variations are intended to be within the scope of the present invention, as defined in the appended claims.

EXAMPLES

Mesoporous N-doped carbon spheres (MPNCs) used for electrode production were synthesized following a previously reported approach. Super C65, N-methyl-2-pyrrolidone (NMP), Polyvinylidene difluoride (PVDF) was purchased from Sigma Aldrich. Lithium hexafluorophosphate (1.0 M) in ethylene carbonate/diethyl carbonate electrolyte (1.0 M LiPF$_6$ EC/DEC = 50/50) was purchased from Elyte. Carbon Coated Al foil (> 99.9 %) was purchased from Cam-energy.

Example 1: Electrodes from particles with different pore sizes but same particle size

Low dispersity mesoporous N-doped carbon nanospheres containing inks were prepared with the following procedure: 10 mg polyvinylidene difluoride (PVDF) binder was dissolved in 1 mL N-methyl-2-pyrrolidone (NMP) and stirred until a clear solution was obtained. 80 mg of the pre-prepared MPNC powder together with 10 mg C65 conductive carbon black (as conductive additive) were added to the solution. The obtained suspension was mixed using a planetary dispenser (Kakuhunter SK-300SII) for at least 5 times at 2000 rpm for 2 min to obtain homogeneous inks. The weight ratio between the MPNC active material, Super C65, and binder was set to 8:1:1. The as-prepared ink was doctor-bladed onto a carbon coated aluminium foil using a ZUA2000 blade and MSK_AFA-II Automatic Thick Film Coater with the thickness set to 250 μm at a speed of 10 mm/s. The film was dried for 1 h on a hot plate at 80°C. The resulting coating was further dried overnight in a vacuum oven from Thermo Scientific at 50°C. To produce electrodes with different intraparticulate pore sizes but same particle sizes, MPNC-7-300-1000, MPNC-12-300-1000, MPNC-23-300-1000, MPNC-60-300-1000 and MPNC-100-300-1000 were used, where the numbers in the sample names indicate the pore size (in nm), particle size (in nm) and carbonization temperature (in °C), respectively.

Example 2: Electrodes from particles with same pore size but different particle sizes

MPNC-containing inks were prepared as described in example 1. To produce electrodes with same intraparticle pore size but different particle sizes, MPNC-7-50-1000, MPNC-7-130-1000 and MPNC-7-300-1000, were used, where the numbers in the sample names indicate pore size (in nm), particle size (in nm) and carbonization temperature (in °C), respectively.

Example 3: Electrochemical Measurements

The cyclic voltammetry (CV) and galvanostatic charge-discharge (GCD) tests for the fabricated electrodes and thereof derived symmetric electrochemical double layer capacitors (EDLC) were performed in the potential range of 0 to 2 V. Electrochemical impedance spectroscopy (EIS) was performed in the frequency range of 300 kHz to 10 mHz at the open circuit voltage with an alternate current amplitude of 5 mA.

**Claims**

1. Porous carbon structure comprising one or more sets of porous spherical carbon particles, wherein each of said one or more sets of porous spherical carbon particles has

   a monomodal, bimodal or multimodal particle diameter distribution, and/or
   a monomodal, bimodal or multimodal templated pore size distribution,
   wherein each mode of said particle diameter distribution defines a subset of porous spherical carbon particles within the set, each subset having a particle diameter dispersity (d) of 1.2 or less, and
   wherein each mode of the templated pore size distribution defines a subset of porous spherical carbon particles within the set, each subset having a templated pore size dispersity (d') of 1.2 or less.

2. Porous carbon structure according to claim 1, wherein one or more of the said sets of porous spherical carbon particles have

   a monomodal particle diameter distribution with a particle diameter dispersity (Đ) of 1.2 or less, or
   a monomodal templated pore size distribution with a templated pore size dispersity (Đ') of 1.2 or less.

3. Porous carbon structure according to claim 1 or 2, wherein one or more of the said sets of porous spherical carbon particles have

   a monomodal particle diameter distribution with a particle diameter dispersity (Đ) of 1.2 or less, and
   a monomodal templated pore size distribution with a templated pore size dispersity (Đ') of 1.2 or less.

4. Porous carbon structure according to any one of claims 1 to 3, consisting of one said set of porous spherical carbon particles.

5. Porous carbon structure according to any one of the previous claims, wherein within a set of porous spherical carbon particles having a bimodal or multimodal templated pore size distribution, individual particles have a monomodal templated pore size distribution, or individual particles have a bimodal or multimodal templated pore size distribution.

6. Porous carbon structure according to any one of the previous claims, wherein at least one of the particle diameter dispersity (Đ), the templated pore size dispersity (Đ'), the modal subset particle diameter dispersity (d), and the modal subset templated pore size dispersity (d') is 1.1 or less.

7. Porous carbon structure according to any one of the previous claims, which is a hierarchical structure, and wherein the porous spherical carbon particles have particle diameters of 10 nm to 5000 nm, preferably of 50 nm to 500 nm, and wherein the templated pore sizes are from 1 nm to 1000 nm, preferably from 5 nm to 100 nm.

8. Porous carbon structure according to any one of the previous claims, wherein the said one or more sets of porous spherical carbon particles are arranged in a layered fashion, each layer comprising one or more sets of porous spherical carbon particles.

9. Porous carbon structure according to claim 8, wherein each layer consists of one set of porous spherical carbon particles.

10. Porous carbon structure according to claim 8, wherein each layer consists of two or more sets of porous spherical carbon particles.

11. Porous carbon structure according to any one of the previous claims, wherein the interparticle pore volume is from 5% to 93%, preferably from 26% to 48%.

12. Porous carbon structure according to any one of the previous claims, wherein a ratio of intraparticle pore volume to interparticle pore volume is from 0.05 to 3.0, preferably from 0.1 to 2.0, more preferably from 0.7 to 1.9.

13. Method of production of a porous carbon structure of any one of claims 1 to 7, comprising the steps of

   (i) providing one or more sets of porous spherical carbon particles as defined in any one of claims 1 to 7;
   (ii) mixing the provided porous spherical carbon particles with one or more additives;
   (iii) applying the obtained mixture onto a substrate to form a layer of porous carbon structure;
   (iv) drying and/or curing the applied mixture to form a dry layer of porous carbon structure; and
   (v) optionally repeating steps (i) and (ii), followed by (iii') applying the obtained mixture onto the previously formed layer of porous carbon structure, and followed by (iv') optionally curing the applied mixture to form a layer of porous carbon structure on top of the previously formed layer of porous carbon structure, followed by optionally (v') repeating step (v),

wherein the method optionally further comprises one or more calendaring steps after step (iv), (iv'), (v) and/or (v').

14. Method according to claim 13, wherein the mixing step (ii) includes addition of a dispersion medium to form an ink or a paste, and wherein steps (iii) and (iii') of applying the obtained ink or paste is carried out by 3D-printing, slot-die coating, ink-jet printing, doctor-blading, spray coating, spin-coating or dip-coating.

15. Method according to claim 13, wherein the mixing step (ii) leads to the formation of a dry particulate composition.

16. Method according to any one of claims 13 to 15, wherein the substrate in step (iii) is a current collector, such as a gas diffusion layer or membrane for a fuel cells or an electrolyzer, an aluminium or copper foil for a battery or a graphite foil for a supercapacitor.

17. Method according to any one of claims 13 to 16, wherein the one or more sets of porous spherical carbon particles of step (i) are obtained by (a) polymerisation of a polymerizable precursor in the presence of a template, in order to form a polymer-template composite, (b) carbonisation of the obtained polymer-template composite and (c) removal of the template by chemical etching, wherein the choice of template and the initiator concentration may be adjusted to independently define particle diameter distribution and pore size distribution.

18. Electrode comprising a porous carbon structure of any one of claims 1 to 12.

19. Electrode according to claim 18, including binders such as for example polymeric binder and/or ionomers.

20. Electrode according to claim 18 or 19, including conductive additives, wherein the conductive additives make up no more than 20% of the total weight of the electrode, such as for example no more than 10% of the electrode.

21. Use of a porous carbon structure of any one of claims 1 to 12 or of an electrode of any one of claims 18 to 20 in an electrochemical energy storage device such as a battery or a double-layer capacitor, such as a supercapacitor or a pseudocapacitor, an electrochemical energy conversion device such as a fuel cell or an electrolyser.

22. Use of a porous carbon structure of any one of claims 1 to 12 or of an electrode of any one of claims 18 to 20 as a carrier, support or scaffold structure for active components, such as enzymes, metals, metal compounds such as oxides, sulfides, nitrides or others, nanoparticles, clusters and/or single-site catalysts, or molecular compounds active in for example heterogeneous catalysis and electrocatalytic reactions.

23. Use of a porous carbon structure of any one of claims 1 to 12 as or in conductive additives/scaffolds, gas diffusion layers, heterogeneous catalysis or in an article of manufacture for drug delivery, adsorption applications, or water purification applications.

24. Use of a porous carbon structure of any one of claims 1 to 12 as a template for the synthesis of microporous, mesoporous and/or macroporous metallic structures and/or metallic compound structures, such as for example metal oxide, metal sulfide, or metal nitride structures, for example.

**Fig. 1**

**Fig. 2**

Fig. 3

**Fig. 4**

EC from MPNCs with different pore sizes but same particle sizes

Fig. 5

EC from MPNCs with different particle sizes but same pore sizes

Fig. 6

Europäisches
Patentamt

European
Patent Office

Office européen
des brevets

# EUROPEAN SEARCH REPORT

**Application Number**

EP 23 18 9884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | HUANG XINHUA ET AL: "Easy Synthesis of Hierarchical Carbon Spheres with Superior Capacitive Performance in Supercapacitors", LANGMUIR, vol. 29, no. 39, 1 October 2013 (2013-10-01), pages 12266-12274, XP93128668, US ISSN: 0743-7463, DOI: 10.1021/la4026969 * abstract * * General synthesis of HPC (page. 12267, left column). * * the whole document * | 1-24 | INV. C01B32/05 H01M4/00 |
| A | LEI ET AL: "Graphitized carbon with hierarchical mesoporous structure templated from colloidal silica particles", MICROPOROUS AND MESOPOROUS MATERIALS, ELSEVIER, AMSTERDAM ,NL, vol. 109, no. 1-3, 21 December 2007 (2007-12-21), pages 109-117, XP022399261, ISSN: 1387-1811, DOI: 10.1016/J.MICROMESO.2007.04.035 * abstract * * 2.1 Sample preparation * * the whole document * | 1-24 | |
| | | | **TECHNICAL FIELDS SEARCHED (IPC)** |
| A | US 2012/300364 A1 (CAI MEI [US] ET AL) 29 November 2012 (2012-11-29) * paragraphs [0021] - [0023] * * the whole document * | 1-24 | C01B H01M |

-/--

The present search report has been drawn up for all claims

| Place of search | Date of completion of the search | Examiner |
|---|---|---|
| The Hague | 7 February 2024 | Straub, Thomas |

EPO FORM 1503 03.82 (P04C01)

Europäisches
Patentamt

European
Patent Office

Office européen
des brevets

**EUROPEAN SEARCH REPORT**

Application Number

EP 23 18 9884

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 10 508 335 B1 (YILMAZ SEFA [GB] ET AL) 17 December 2019 (2019-12-17) * column 17, line 44 – column 18, line 9 * * column 22, line 22 – column 23, line 7 * * the whole document * | 1-24 | |

TECHNICAL FIELDS
SEARCHED       (IPC)

The present search report has been drawn up for all claims

| Place of search | Date of completion of the search | Examiner |
|---|---|---|
| The Hague | 7 February 2024 | Straub, Thomas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 23 18 9884

This annex lists the patent family members relating to the patent documents cited in  the above-mentioned European search report.
The members are as contained in the European Patent Office EDP file on
The European Patent Office is in no way liable for these particulars which are merely given for the purpose of information.

07-02-2024

| Patent document cited in search report | | Publication date | Patent family member(s) | Publication date |
|---|---|---|---|---|
| US 2012300364 | A1 | 29-11-2012 | CN     102800486 A<br>DE 102012208636 A1<br>US     2012300364 A1 | 28-11-2012<br>27-12-2012<br>29-11-2012 |
| US 10508335 | B1 | 17-12-2019 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8784768 B2
- WO 2022220451 A1
- WO 2007140224 A2
- US 8361663 B2

**Non-patent literature cited in the description**

- **N. DIEZ et al.** Monodisperse Porous Carbon Nanospheres with UltraHigh Surface Area for Energy Storage in Electrochemical Capacitors. *Batteries & Supercaps*, 2022, vol. 5 (3), e202100169
- Highly Packed Monodisperse Porous Carbon Microspheres for Energy Storage in Supercapacitors and Li-S Batteries. *ChemElectroChem*, 2020, vol. 7, 3798-3810
- **HURSÁN et al.** Morphological Attributes Govern Carbon Dioxide Reduction on N-Doped Carbon Electrodes. *Joule*, 2019, vol. 3, 1719-1733
- **LIU et al.** Preparation of three-dimensional ordered mesoporous carbon sphere arrays by a two-step templating route and their application for supercapacitors. *J. Mater. Chem.*, 2009, vol. 19, 3661-3667
- **HUANG et al.** Easy Synthesis of Hierarchical Carbon Spheres with Superior Capacitive Performance in Supercapacitors. *Langmuir*, 2013, vol. 29, 12266-12274
- **BERESTOK et al.** High-Efficiency Monolithic Photosupercapacitors: Smart Integration of a Perovskite Solar Cell with a Mesoporous Carbon Double-Layer Capacitor. *Sol. RRL*, 2021, vol. 5, 2100662
- A Monolithic Silicon-Mesoporous Carbon Photosupercapacitor with High Overall Photoconversion Efficiency. *Adv. Mater. Technol.*, 2022, vol. 7, 2200237
- *Pure Appl. Chem.*, 2011, vol. 83 (12), 2251-2259
- *Pure & Appl. Chem.*, 1994, vol. 66 (8), 1739-1758
- **MELKE et al.** Electrochemical stability of silica templated polyaniline derived mesoporous N-doped carbons for the design of Pt based oxygen reduction reaction catalysts. *Carbon*, 2019, vol. 146, 44-59
- *Investigating the Effect of Microstructure and Surface Functionalization of Mesoporous N-Doped Carbons on V4+/V5+ Kinetics*, https://dx.doi.org/10.1021/acsaem.0c01489